# EUROPÄISCHE PATENTSCHRIFT

(11) **EP 3 399 223 B1**
(45) Veröffentlichungstag und Bekanntmachung des Hinweises auf die Patenterteilung: **06.01.2021**
(21) Anmeldenummer: 18159850.9
(22) Anmeldetag: 05.03.2018
(51) Int. Cl.: F16P 3/14

(54) **VORRICHTUNG ZUR ABSICHERUNG EINER ANLAGE**
DEVICE FOR PROTECTING AN INSTALLATION
DISPOSITIF DE PROTECTION D'UNE INSTALLATION

(30) Priorität: 25.04.2017 DE 202017102411 U
(43) Veröffentlichungstag der Anmeldung: 07.11.2018
(73) Patentinhaber: Leuze electronic GmbH + Co. KG, 73277 Owen/Teck (DE)
(72) Erfinder: Eder, Alexander, 86928 Hofstetten (DE); Rohbeck, Volker, 85244 Röhrmoos (DE); Sillge, Ray, 80689 München (DE); Feller, Bernhard, 86316 Friedberg (DE)
(74) Vertreter: Ruckh, Rainer Gerhard

(56) Entgegenhaltungen:
- EP-A1- 2 927 874
- EP-A2- 1 793 244
- EP-A2- 1 923 726
- DE-B3- 10 312 972
- DE-B4-102004 038 906
- US-A1- 2013 197 694

## Beschreibung

Die Erfindung betrifft eine Vorrichtung zur Absicherung einer Anlage.

Eine derartige Vorrichtung wird generell im Bereich der Sicherheitstechnik, insbesondere im Bereich des Personenschutzes eingesetzt. Mit derartigen Vorrichtungen werden Anlagen wie zum Beispiel Maschinen, von denen Gefahren für Personen ausgehen können, abgesichert. Typischerweise wird der Zugang zu einer solchen Anlage mit wenigstens einem Sicherheitssensor abgesichert, sodass ein unkontrolliertes Eintreten in den Gefahrenbereich der Anlage vermieden wird.

Der Sicherheitssensor ist derart ausgebildet, dass er sicher, das heißt entsprechend den normativen Sicherheitsanforderungen, Objekte in einem Überwachungsbereich erkennt und abhängig von der Objektdetektion eine Sicherheitssteuerung ansteuert. Wird mit dem Sicherheitssensor kein Objekt erkannt, generiert der Sicherheitssensor ein Schaltsignal mit einem Schaltzustand, anhand dessen die Sicherheitssteuerung erkennt, dass kein Eingriff in den Gefahrenbereich der Anlage droht, sodass die Sicherheitssteuerung ein Freigabesignal generieren kann, anhand dessen der Betrieb der Anlage freigegeben wird. Detektiert der Sicherheitssensor einen Objekteingriff im Überwachungsbereich, so generiert der Sicherheitssensor ein Schaltsignal mit einem diesen Objekteingriff meldenden Schaltzustand. Anhand dieses Schaltsignals erkennt die Sicherheitssteuerung einen drohenden Eingriff in den Gefahrenbereich der Anlage, sodass die Sicherheitssteuerung einen Abschaltbefehl für die Anlage generiert, das heißt die Anlage wird stillgesetzt, damit von dieser keine Gefahren mehr ausgehen können.

Typischerweise werden über definierte, abgegrenzte Zuführbereiche der Anlage zu bearbeitende Teile, Werkstücke oder dergleichen zugeführt. Hierzu müssen diese Gegenstände den Sicherheitssensor passieren, bevor sie in den Gefahrenbereich der Anlage gelangen. Da der Sicherheitssensor diese Gegenstände erkennt, würde dies zu einem Abschaltbefehl für die Anlage führen. Ein derartiger Abschaltbefehl ist jedoch in diesem Fall unerwünscht und unnötig, da es sich bei diesen Gegenständen um nichtsicherheitskritische Objekte handelt, die zu keinen Gefährdungssituationen führen, wenn sie in den Gefahrenbereich der Anlage gelangen. Ein Abschaltbefehl würde daher die Verfügbarkeit der Anlage unnötig reduzieren.

Um derartige unnötige Abschaltbefehle zu vermeiden, ist es bekannt, Muting-Sensoren im Vorfeld des Sicherheitssensors anzuordnen. Diese Muting-Sensoren erkennen und identifizieren die nichtsicherheitskritischen Objekte bevor sie in den von Sicherheitssensoren überwachten Überwachungsbereich eindringen. Mittels der Muting-Sensoren wird dann ein Überbrückungssignal, das heißt ein Muting-Signal generiert, mittels dessen der Sicherheitssensor gemutet, das heißt überbrückt wird. Durch diese Überbrückung ist der Sicherheitssensor deaktiviert und generiert kein Schaltsignal, wenn die nichtsicherheitskritischen Objekte den Überwachungsbereich passieren. Damit werden unnötige Abschaltbefehle der Anlage vermieden. Nachdem die nichtsicherheitskritischen Objekte den Sicherheitssensor passiert haben, wird das Muting wieder aufgehoben und der Sicherheitssensor übernimmt wieder seine Überwachungsfunktion.

Damit kann die Verfügbarkeit der Anlage erhöht werden. Nachteilig hierbei ist jedoch, dass die Installation und Montage derartiger Muting-Sensoren einen hohen Zeit- und Kostenaufwand bedingt. Weiterhin ist nachteilig, dass mit derartigen Muting-Sensoren, die typischerweise von Lichtschranken gebildet sind, eine Unterscheidung von nichtsicherheitskritischen Objekten und sicherheitskritischen Objekten oft nur unzureichend möglich ist.

Aus der DE 10 2004 038 906 B4 ist eine Weiterbildung derartiger Systeme derart bekannt, nichtsicherheitskritische Objekte durch auf diesen aufgebrachten Marken eindeutig zu identifizieren. Diese Marken können dann mit einer geeigneten Erkennungsvorrichtung gelesen werden. Wird dann mit der Erkennungsvorrichtung eine solche Marke gelesen, wird der zugeordnete Sicherheitssensor überbrückt.

Die DE 10 2004 038 906 B4 betrifft ein Verfahren zur Erfassung beweglicher Objekte mit mindestens einer berührungslos wirkenden Schutzeinrichtung und einer Auswerteeinheit die ein Steuersignal abgibt, das abhängig ist von einem zulässigen oder unzulässigen Objekt das in ein einen Überwachungsbereich begrenzendes Schutzfeld der berührungslos wirkenden Schutzeinrichtung eindringt. Ein Objekt mit einer aufgebrachten Marke wird vor dem Eintritt in den Überwachungsbereich von wenigstens einer kontaktlosen Erkennungseinrichtung identifiziert. Objektinformationen werden von der Marke an die Auswerteeinheit übertragen, wobei aufgrund der aus der kontaktlosen Erkennungseinrichtung erfassten Objektinformationen die berührungslos wirkende Schutzeinrichtung mit den zu dem Objekt gehörenden geometrischen Daten konfiguriert wird.

Die EP 1 923 726 A2 betrifft einen optischen Sensor der zur Erfassung von Objekten in einem Überwachungsbereich, und mit einem Sendelichtstrahlen emittierenden Sender und einem Empfangslichtstrahlen empfangenden Empfänger dient. In einer Auswerteeinheit erfolgt eine fehlersichere Auswertung der Empfangssignale des Empfängers zur Generierung von Sicherheitsdaten bildenden Objektfeststellungssignalen. Zur Übermittlung von Daten ist eine Funkverbindung vorgesehen.

Der Erfindung liegt die Aufgabe zugrunde, eine Vorrichtung zur Absicherung einer Anlage so auszubilden, dass diese mit geringem konstruktivem Aufwand eine erhöhte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Vorrichtung zur Absicherung einer Anlage mit einem einen Überwachungsbereich überwachenden Sicherheitssensor und einer diesem zugeordneten Sicherheitssteuerung. Mit dem Sicherheitssensor wird ein Schaltsignal generiert, dessen Schaltzustände angeben, ob sich ein Objekt im Überwachungsbereich befindet oder nicht. Das Schaltsignal wird in die Sicherheitssteuerung eingelesen, in welcher abhängig vom Schaltsignal ein sicherheitsrelevantes Signal für die Anlage generiert wird. Ein Kennzeichnungsdetektor ist vorgesehen, mittels dessen auf nichtsicherheitskritische Objekte angeordnete Kennzeichnungen erfassbar sind, welche jeweils mit wenigstens einer Prüfsumme abgesicherte Dateninhalte enthalten, anhand derer das nichtsicherheitskritische Objekt identifizierbar ist. Die Dateninhalte und die zugehörige Prüfsumme werden der Sicherheitssteuerung zugeführt und ausgewertet, wobei in Abhängigkeit dieser Auswertung in der Sicherheitssteuerung ein Überwachungssignal für den Sicherheitssensor generierbar ist.

Die erfindungsgemäße Vorrichtung eignet sich zum Einsatz im Bereich der Sicherheitstechnik, insbesondere im Bereich des Personenschutzes. Mit den von der Sicherheitssteuerung gesteuerten Sicherheitssensoren können gefahrbringende Objekteingriffe in den Überwachungsbereich sicher erfasst werden, sodass die Anlage sicher geschützt ist und Gefährdungen für Personen sicher vermieden werden können.

Gleichzeitig weist die erfindungsgemäße Vorrichtung eine hohe Verfügbarkeit auf, da durch das erfindungsgemäße Muting nichtsicherheitskritische Objekte den Überwachungsbereich, der von Sicherheitssensoren überwacht wird, passieren können, weil der Sicherheitssensor für die Zeitdauer des Passierens des Überwachungsbereichs überbrückt, das heißt gemutet ist. Damit wird ein unnötiges Stillsetzen der Anlage dadurch, dass der Sicherheitssensor auf ein den Überwachungsbereich passierendes nichtsicherheitskritisches Objekt reagiert und dadurch ein sicherheitsrelevantes Signal für die Anlage, insbesondere einen Abschaltbefehl in der Sicherheitssteuerung generiert, vermieden.

Ein wesentlicher Aspekt der erfindungsgemäßen Vorrichtung besteht darin, dass nichtsicherheitskritische Objekte, die eine Überbrückung des Sicherheitssensors auslösen sollen, von sicherheitskritischen Objekten wie Personen, die von Sicherheitssensoren zur Vermeidung von Gefährdungen erkannt werden müssen, mit hoher Sicherheit unterschieden werden können.

Diese Identifizierung von nichtsicherheitskritischen Objekten erfolgt erfindungsgemäß dadurch, dass die nichtsicherheitskritischen Objekte mit Kennzeichnungen versehen sind, die von einem Kennzeichnungsdetektor gelesen werden. Jede Kennzeichnung enthält dabei Dateninhalte, die das jeweilige nichtsicherheitskritische Objekt identifizieren und wenigstens eine Prüfsumme, mit der die Dateninhalte abgesichert sind. Diese in den Kennzeichnungen enthaltenen Informationen werden mit dem Kennzeichnungsdetektor gelesen und dann der Sicherheitssteuerung zugeführt.

Durch den fehlersicheren Aufbau der Sicherheitssteuerung einerseits und die Auswertung der Prüfsumme zusätzlich zu den Dateninhalten einer Kennzeichnung wird eine fehlersichere Auswertung der Informationen der Kennzeichnung und daher eine fehlersichere Identifizierung des nichtsicherheitskritischen Objekts gewährleistet. Damit ist weiterhin gewährleistet, dass die Überbrückung des Sicherheitssensors entsprechend fehlersicher ist.

Dies ist eine wesentliche Voraussetzung zur Erfüllung der Sicherheitsanforderungen der gesamten Vorrichtung, da mit dem in der Sicherheitssteuerung generierten Überbrückungssignal der Sicherheitssensor gemutet und damit dessen Überwachungsfunktion deaktiviert ist. Eine solche Überbrückung muss daher so ausgebildet sein, dass ein Passieren sicherheitskritischer Objekte durch den Überwachungsbereich ausgeschlossen ist.

Ein weiterer Vorteil der Erfindung besteht darin, dass mit dem die Kennzeichnungen erfassenden Kennzeichnungsdetektoren eine sichere und konstruktiv einfachere Erkennung von nichtsicherheitskritischen Objekten im Vergleich zu Muting- Sensoren wie zum Beispiel Lichtschranken möglich ist.

Die Sicherheitssteuerung weist zur Gewährleistung einer fehlersicheren Signalauswertung vorteilhaft einen zweikanaligen Aufbau auf, vorzugsweise in Form zweier sich gegenseitig zyklisch überwachender Rechnereinheiten.

Dabei können die Sicherheitssteuerung und der Sicherheitssensor separate Einheiten bilden. Zu diesem Fall weist der Sicherheitssensor eine eigene, fehlersichere Auswerteeinheit zur Auswertung der Sensorsignale auf, die vorteilhaft aus zwei sich gegenseitig zyklisch überwachenden Rechnereinheiten besteht.

Gemäß einer vorteilhaften Ausgestaltung ist die Sicherheitssteuerung im Sicherheitssensor integriert.

In diesem Fall kann die Sicherheitssteuerung die Funktion der Auswerteeinheit des Sicherheitssensors mit übernehmen.

Der Sicherheitssensor selbst kann dabei insbesondere als Lichtvorhang oder allgemein in Form einer Lichtschrankenanordnung ausgebildet sein. Weiterhin kann der Sicherheitssensor als Flächendistanzsensor, das heißt als scannender Distanzsensor ausgebildet sein, bei welchem von einem Sender emittierte Lichtstrahlen periodisch innerhalb des Überwachungsbereichs geführt sind. Schließlich kann der Sicherheitssensor als bildaufhehmender Sensor ausgebildet sein, das heißt der Sicherheitssensor weist eine Kamera zur Aufnahme von Bildern des Überwachungsbereichs auf.

Gemäß einer ersten Variante sind die Kennzeichnungen von Barcodes gebildet, und der Kennzeichnungsdetektor ist ein Barcodeleser.

Die Kennzeichnungen können dabei generell von eindimensionalen oder zweidimensionalen Barcodes gebildet sein, in deren Kontrastmustern die Dateninhalte mit den Prüfsummen kodiert sind.

Gemäß einer zweiten Variante sind die Kennzeichnungen von Transpondern gebildet und der Kennzeichnungsdetektor ist ein RFID-Lesegerät.

Bei dieser Variante ist vorteilhaft, dass unterschiedliche Dateninhalte und Prüfsummen in den jeweiligen Transponder eingegeben und bei Bedarf geändert werden können, wodurch sich eine hohe Flexibilität der Einsatzmöglichkeiten ergibt.

Der zur Erfassung der Kennzeichnung eingesetzte Kennzeichnungsdetektor kann in einer geeigneten Position zum Sicherheitssensor angeordnet werden. Dabei kann der Kennzeichnungsdetektor sowohl außerhalb des Sicherheitssensors angeordnet sein, als auch im Sicherheitssensor integriert sein.

Die Überbrückung des Sicherheitssensors erfolgt mittels der Sicherheitssteuerung dadurch, dass die Sicherheitssteuerung in Abhängigkeit der Dateninhalte einer Kennzeichnung, deren Gültigkeit durch die zugeordnete Prüfsumme überprüft wird, ein nicht sicherheitskritisches Objekt erkennt. Im einfachsten Fall wird anhand der erfassten Dateninhalte das mit der Kennzeichnung gekennzeichnete nichtsicherheitskritische Objekt nur als solches, das heißt ohne weitere Klassifizierung erfasst. Die Sicherheitssteuerung gibt dann eine vorgegebene Überbrückungszeit vor, für welche der Sicherheitssensor überbrückt ist.

Gemäß einer ersten Weiterbildung kann die Kennzeichnung als weitere Dateninhalte detaillierte Objektinformationen über das mit der Kennzeichnung gekennzeichnete nichtsicherheitskritische Objekt enthalten. Hierzu gehören beispielsweise die Abmessungen, das Gewicht oder der Ladezustand eines nichtsicherheitskritischen Objekts.

In die Sicherheitssteuerung kann dann in Abhängigkeit dieser Objektinformationen die Überbrückung, insbesondere die Überbrückungszeit des Sicherheitssensors vorgegeben werden.

Weiterhin können die Dateninhalte einer Kennzeichnung auch Steuerinformationen für ein durchzuführendes Muting enthalten. Beispielsweise kann in den Dateninhalten die Überbrückungszeit des Sicherheitssensors enthalten sein.

Generell kann dabei eine Kennzeichnung unterschiedliche Dateninhalte enthalten, die mit verschiedenen Prüfsummen abgesichert ist.

Schließlich können in der Sicherheitssteuerung auch die Erfassungszeiten der Erfassung von Kennzeichnungen für Plausibilitätskontrollen, ob anhand der Erkennung von Kennzeichnungen ein Muting des Sicherheitssensors möglich ist, durchgeführt werden.

Gemäß einer besonders vorteilhaften Ausgestaltung ist mit der Erfassung von Kennzeichnungen die Funktion der Sicherheitssteuerung überprüfbar.

Durch das zweikanalige Überprüfen der Dateninhalte und Prüfsummen einer Kennzeichnung kann überprüft werden, ob die Sicherheitssteuerung selbst fehlerfrei arbeitet, wodurch die Fehlersicherheit der gesamten Vorrichtung weiter erhöht wird.

Die Erfindung wird im Folgenden anhand der Zeichnungen erläutert. Es zeigen:
- Figur 1:: Schematische Darstellung eines Ausführungsbeispiels der erfindungsgemäßen Vorrichtung.
- Figur 2:: Schematische Darstellung eines Lichtvorhangs als Bestandteil der Vorrichtung gemäß Figur 1.
- Figur 3:: Schematische Darstellung von in einer Kennzeichnung für ein nichtsicherheitskritisches Objekt enthaltenen Informationen.

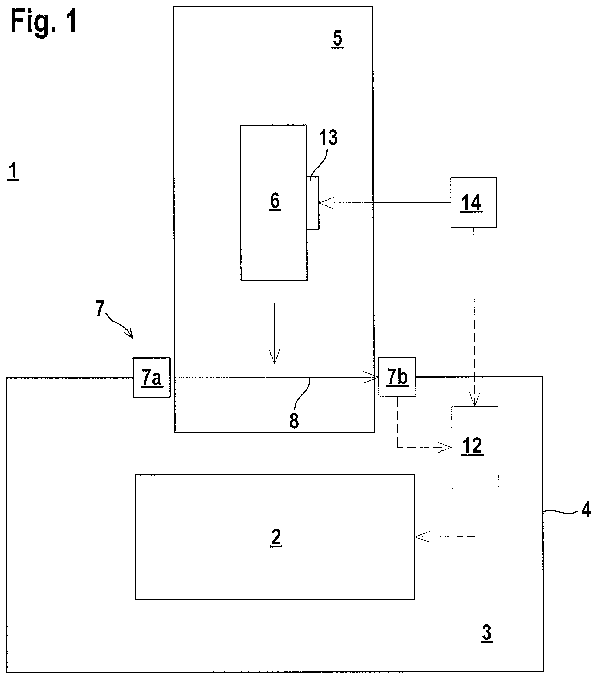

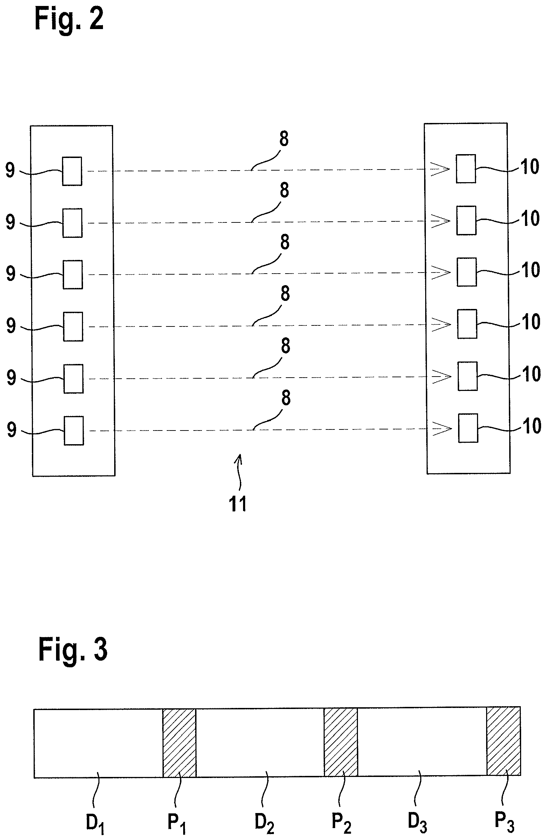

Figur 1 zeigt schematisch ein Ausführungsbeispiel einer Vorrichtung 1 zur Absicherung einer Anlage. Die Anlage umfasst eine Maschine 2, von der Gefährdungen für Personen ausgehen können. Der Gefahrenbereich 3 um die Maschine 2 ist mit einer Umzäunung 4 rundum abgesichert, wobei lediglich ein Zugangsbereich freibleibt, über welchen mittels einer Förderstrecke 5 mit der Maschine 2 zu bearbeitende Werkstücke oder dergleichen als nichtsicherheitskritische Objekte 6 in den Gefahrenbereich 3 gefördert werden. Die nichtsicherheitskritischen Objekte 6 werden auf der Förderstrecke 5 in einer mit einem Pfeil gekennzeichneten Förderrichtung transportiert. Zur Absicherung des Zugangs zum Gefahrenbereich 3 ist als Sicherheitssensor ein Lichtvorhang 7 vorgesehen. Wie Figur 2 zeigt, weist der Lichtvorhang 7 eine Sendereinheit 7a mit einer Reihenanordnung von Lichtstrahlen 8 emittierenden Sendern 9 und eine Empfängereinheit 7b mit einer Reihenanordnung von Lichtstrahlen 8 empfangenden Empfängern 10 auf. Die Lichtstrahlen 8 spannen einen externen Überwachungsbereich auf 11, innerhalb dessen mit dem Lichtvorhang 7 Objekte erkannt werden können. Jeweils einem Sender 9 ist ein Empfänger 10 so gegenüberliegend angeordnet, dass bei freiem Überwachungsbereich 11 die Lichtstrahlen 8 des jeweiligen Senders 9 nur zum gegenüberliegenden Empfänger 10 gelangen. Die so gebildeten Sender-Empfängerpaare werden durch eine optische Synchronisation in bekannter Weise zyklisch einzeln nacheinander aktiviert. Ein Objekt im Überwachungsbereich 11 wird dadurch erkannt, dass der Strahlengang wenigstens einer der Lichtstrahlen 8 unterbrochen ist. Diese Auswertung erfolgt in einer nicht dargestellten Auswerteeinheit. Zur Erfüllung der geltenden Sicherheitsanforderungen weist die Auswerteeinheit einen redundanten Aufbau auf, vorzugsweise in Form zweier sich gegenseitig überwachenden Rechnereinheiten.

In der Auswerteeinheit des Sicherheitssensors wird in Abhängigkeit der Empfangssignale der Empfänger 10 ein binäres Schaltsignal generiert, dessen Schaltzustände angeben, ob sich ein Objekt im Überwachungsbereich 11 befindet oder nicht.

Das Schaltsignal wird in eine Sicherheitssteuerung 12 eingelesen, die einen fehlersicheren, vorzugsweise zweikanaligen Aufbau aufweist, insbesondere in Form zweier sich gegenseitig zyklisch überwachender Rechnereinheiten.

Prinzipiell kann die Sicherheitssteuerung 12 auch im Sicherheitssensor integriert sein. In diesem Fall übernimmt die Sicherheitssteuerung 12 die Funktion der Auswerteeinheit.

Die Sicherheitssteuerung 12 steuert den Betrieb der Maschine 2, indem sie in Abhängigkeit der Schaltsignale des Sicherheitssensors ein sicherheitsrelevantes Signal generiert. Wird mit dem Sicherheitssensor kein Objekt im Überwachungsbereich 11 erkannt und ein entsprechendes Schaltsignal generiert, wird der Betrieb der Maschine 2 freigegeben. Wird mit dem Sicherheitssensor ein Objekt im Überwachungsbereich 11 erkannt und ein entsprechendes Schaltsignal generiert, wird in der Sicherheitssteuerung 12 als sicherheitsrelevantes Signal ein Abschaltbefehl für die Maschine 2 generiert, sodass von dieser keine Gefahren mehr ausgehen können.

Im Gegensatz zu sicherheitskritischen Objekten, insbesondere Personen, deren Durchschritt durch den Überwachungsbereich 11 von Sicherheitssensoren sicher erkannt werden muss um Gefährdungen der sicherheitskritischen Objekte oder Personen im Gefahrenbereich 3 auszuschließen, führen die nichtsicherheitskritischen Objekte 6 zu keiner Gefährdung. Demzufolge soll der Sicherheitssensor bei Durchgang eines nichtsicherheitskritischen Objekts 6 durch den Überwachungsbereich 11 überbrückt, das heißt gemutet sein, damit verhindert wird, dass durch das Schaltsignal des Sicherheitssensors die Maschine 2 stillgesetzt wird.

Zur Durchführung des Mutings ist jedes nichtsicherheitskritische Objekt 6 mit einer Kennzeichnung 13 versehen, die mit einem Kennzeichnungsdetektor 14 gelesen werden kann.

Prinzipiell kann eine Kennzeichnung 13 von einer Marke, insbesondere einem Barcode gebildet sein. Im vorliegenden Fall ist jede Kennzeichnung 13 von einem Transponder gebildet. Dementsprechend ist der Kennzeichnungsdetektor 14 von einem RFID-Lesegerät gebildet.

Wie Figur 1 zeigt, befindet sich der Kennzeichnungsdetektor 14 seitlich an der Förderstrecke 5, und zwar in Förderrichtung vor dem Sicherheitssensor. Prinzipiell kann der Kennzeichnungsdetektor 14 auch im Sicherheitssensor integriert sein. Die vom Kennzeichnungsdetektor 14 generierten Signale werden in die Sicherheitssteuerung 12 eingelesen.

Im vorliegenden Fall sind in der Kennzeichnung 13 mehrere Dateninhalte Dᵢ vorgesehen, die jeweils mit Prüfsummen Pᵢ abgesichert sind, wie Figur 3 zeigt. Prinzipiell können auch mehrere Dateninhalte zusammen nur mit einer Prüfsumme abgesichert sein. Schließlich kann in der Kennzeichnung 13 auch nur ein mit einer Prüfsumme abgesicherter Dateninhalt enthalten sein.

Im vorliegenden Fall enthält eine Kennzeichnung 13 Dateninhalte, die das nichtsicherheitskritische Objekt 6, das mit der Kennzeichnung 13 versehen ist, näher beschreiben. So können als Dateninhalte das Gewicht, die Abmessungen und/oder der Ladezustand des nichtsicherheitskritischen Objekts 6 gespeichert sein. Allgemein enthält die Kennzeichnung 13 wenigstens einen Dateninhalt, anhand dessen das nichtsicherheitskritische Objekt 6 als solches identifizierbar ist.

Im Kennzeichnungsdetektor 14 wird, wenn das nichtsicherheitskritische Objekt 6 diesen passiert, die Kennzeichnung 13 und die darin enthaltenen Dateninhalte gelesen und die Prüfsumme überprüft. Die Dateninhalte mit den Prüfsummen werden dann in die Sicherheitssteuerung 12 eingelesen. Durch eine Prüfung der Dateninhalte und der Prüfsumme kann dabei die Funktion der Sicherheitssteuerung 12 selbst überprüft werden. Weiterhin generiert die Sicherheitssteuerung 12 in Abhängigkeit der gelesenen Dateninhalte und Prüfsummen ein Überbrückungssignal, mit dem der Sicherheitssensor gemutet wird. Die Zeitdauer des Mutings ist so gewählt, dass der Sicherheitssensor solange gemutet bleibt, bis das nichtsicherheitskritische Objekt 6 den Sicherheitssensor vollständig passiert hat. Die Zeitdauer des Mutings kann in der Sicherheitssteuerung 12 als Parameter vorgegeben sein. Weiterhin kann in der Sicherheitssteuerung 12 die Zeitdauer des Mutings aus den Dateninhalten der Kennzeichnungen 13 berechnet werden. Schließlich kann die Zeitdauer des Mutings als Steuerinformation in der Kennzeichnung 14 enthalten sein.

### Bezugszeichenliste

- (1): Vorrichtung
- (2): Maschine
- (3): Gefahrenbereich
- (4): Umzäunung
- (5): Förderstrecke
- (6): nichtsicherheitskritisches Objekt
- (7): Lichtvorhang
- (7a): Sendereinheit
- (7b): Empfängereinheit
- (8): Lichtstrahl
- (9): Sender
- (10): Empfänger
- (11): Überwachungsbereich
- (12): Sicherheitssteuerung
- (13): Kennzeichnung
- (14): Kennzeichnungsdetektor

## Patentansprüche

1. Vorrichtung (1) zur Absicherung einer Anlage mit einem einen Überwachungsbereich (11) überwachenden Sicherheitssensor und einer diesem zugeordneten Sicherheitssteuerung (12), wobei mit dem Sicherheitssensor ein Schaltsignal generiert wird, dessen Schaltzustände angeben, ob sich ein Objekt im Überwachungsbereich (11) befindet oder nicht, wobei das Schaltsignal in die Sicherheitssteuerung (12) eingelesen wird, in welcher abhängig vom Schaltsignal ein sicherheitsrelevantes Signal für die Anlage generiert wird, wobei ein Kennzeichnungsdetektor (14) vorgesehen ist, mittels dessen auf nichtsicherheitskritischen Objekten (6) angeordnete Kennzeichnungen (13) erfassbar sind, **dadurch gekennzeichnet, dass** die Kennzeichnungen jeweils mit wenigstens einer Prüfsumme abgesicherte Dateninhalte enthalten, anhand derer das nichtsicherheitskritische Objekt (6) identifizierbar ist, und dass die Dateninhalte und die zugehörige Prüfsumme der Sicherheitssteuerung (12) zugeführt und ausgewertet werden, wobei in Abhängigkeit dieser Auswertung in der Sicherheitssteuerung (12) ein Überbrückungssignal für den Sicherheitssensor generierbar ist.

2. Vorrichtung (1) nach Anspruch 1, **dadurch gekennzeichnet, dass** die Sicherheitssteuerung (12) im Sicherheitssensor integriert ist.

3. Vorrichtung (1) nach einem der Ansprüche 1 oder 2, **dadurch gekennzeichnet, dass** die Kennzeichnungen (13) von Barcodes gebildet sind, und dass der Kennzeichnungsdetektor (14) ein Barcodeleser ist.

4. Vorrichtung (1) nach einem der Ansprüche 1 oder 2, **dadurch gekennzeichnet, dass** die Kennzeichnungen (13) von Transpondern gebildet sind und dass der Kennzeichnungsdetektor (14) ein RFID-Lesegerät ist.

5. Vorrichtung (1) nach einem der Ansprüche 1 - 4, **dadurch gekennzeichnet, dass** der Kennzeichnungsdetektor (14) im Sicherheitssensor integriert ist.

6. Vorrichtung (1) nach einem der Ansprüche 1 - 5, **dadurch gekennzeichnet, dass** der Sicherheitssensor ein Lichtvorhang 7, ein Flächendistanzsensor oder ein bildaufnehmender Sensor ist.

7. Vorrichtung (1) nach einem der Ansprüche 1 - 6, **dadurch gekennzeichnet, dass** die Sicherheitssteuerung (12) einen zweikanaligen Aufbau aufweist.

8. Vorrichtung (1) nach einem der Ansprüche 1 - 7, **dadurch gekennzeichnet, dass** mittels der Sicherheitssteuerung (12) der Sicherheitssensor in Abhängigkeit von in den Dateninhalten und der Erfassungszeit der Kennzeichnungen (13) mittels des Kennzeichnungsdetektors (14) überbrückt ist.

9. Vorrichtung (1) nach einem der Ansprüche 1 - 8, **dadurch gekennzeichnet, dass** eine Kennzeichnung (13) als Dateninhalt Objektinformationen über das nichtsicherheitskritische Objekt (6), das mit dieser Kennzeichnung (13) gekennzeichnet ist, enthält.

10. Vorrichtung (1) nach einem der Ansprüche 1 - 9, **dadurch gekennzeichnet, dass** eine Kennzeichnung (13) als Dateninhalt Steuerinformationen für eine Überbrückung des Sicherheitssensors enthält.

11. Vorrichtung (1) nach einem der Ansprüche 1 - 10, **dadurch gekennzeichnet, dass** eine Kennzeichnung (13) unterschiedliche Dateninhalte enthält, die mit verschiedenen Prüfsummen abgesichert ist.

12. Vorrichtung (1) nach einem der Ansprüche 1 - 11, **dadurch gekennzeichnet, dass** mit der Erfassung von Kennzeichnungen (13) die Funktion der Sicherheitssteuerung (12) überprüfbar ist.

## Claims

1. A device (1) for protecting an installation with a safety sensor monitoring a monitoring area (11) and a safety controller (12) associated therewith, wherein a switching signal is generated with the safety sensor, the switching states of which indicate whether or not an object is located in the monitoring area (11), wherein the switching signal is read into the safety controller (12), in which a safetyrelevant signal for the installation is generated depending on the switching signal, wherein an identification detector (14) is provided, by means of which identifiers (13) arranged on non-safety-critical objects (6) can be detected, **characterised in that** the identifiers each contain data contents protected by at least one checksum, by means of which the non-safety-critical object (6) can be identified, and **in that** the data contents and the associated checksum are fed to the safety controller (12) and evaluated, it being possible to generate a bypass signal for the safety sensor in the safety controller (12) as a function of this evaluation.

2. The device (1) according to claim 1, **characterised in that** the safety control (12) is integrated in the safety sensor.

3. The device (1) according to one of claims 1 or 2, **characterised in that** the markings (13) are formed by bar codes, and that the marking detector (14) is a bar code reader.

4. The device (1) according to one of claims 1 or 2, **characterised in that** the identifiers (13) are formed by transponders and that the identifier detector (14) is an RFID reader.

5. The device (1) according to one of claims 1 to 4, **characterised in that** the identification detector (14) is integrated in the safety sensor.

6. The device (1) according to one of claims 1 to 5, **characterised in that** the safety sensor is a light curtain 7, an area distance sensor or an image recording sensor.

7. The device (1) according to one of claims 1 to 6, **characterised in that** the safety control (12) has a two-channel structure.

8. The device (1) according to one of claims 1 to 7, **characterised in that** by means of the safety control (12) the safety sensor is bridged as a function of the data contents and the detection time of the identification marks (13) by means of the identification mark detector (14).

9. The device (1) according to one of claims 1 to 8, **characterised in that** an identifier (13) contains as data content object information about the non-safety-critical object (6) identified by this identifier (13).

10. The device (1) according to one of claims 1 to 9, **characterised in that** an identification (13) contains as data content control information for bridging the safety sensor.

11. The device (1) according to one of the claims 1 to 10, **characterised in that** an identification (13) contains different data contents, which is secured with different checksums.

12. The device (1) according to one of the claims 1 to 11, **characterised in that** the function of the safety control (12) can be checked by detecting identification marks (13).

## Revendications

1. Dispositif (1) pour protéger une installation avec un capteur de sécurité surveillant une zone de surveillance (11) et un contrôleur de sécurité (12) associé à celui-ci, dans lequel un signal de commutation est généré avec le capteur de sécurité, dont les états de commutation indiquent si un objet se trouve ou non dans la zone de surveillance (11), dans lequel le signal de commutation est lu dans le contrôleur de sécurité (12), dans lequel un signal important pour la sécurité de l'installation est généré en fonction du signal de commutation, dans lequel un détecteur d'identification (14) est prévu, au moyen duquel des identificateurs (13) disposés sur des objets (6) non critiques pour la sécurité peuvent être détectés, **caractérisé en ce que** les identificateurs contiennent chacun des contenus de données protégés par au moins une somme de contrôle, au moyen de laquelle l'objet (6) non critique pour la sécurité peut être identifié, et **en ce que** les contenus de données et la somme de contrôle associée sont amenés au contrôleur de sécurité (12) et évalués, un signal de dérivation pour le capteur de sécurité pouvant être généré dans le contrôleur de sécurité (12) en fonction de cette évaluation.

2. Dispositif (1) selon la revendication 1, **caractérisé en ce que** la commande de sécurité (12) est intégrée dans le capteur de sécurité.

3. Dispositif (1) selon l'une des revendications 1 ou 2, **caractérisé en ce que** les marquages (13) sont formés par des codes à barres, et que le détecteur de marquage (14) est un lecteur de codes à barres.

4. Dispositif (1) selon l'une des revendications 1 ou 2, **caractérisé en ce que** les iden- tifiants (13) sont formés par des transpondeurs et que le détecteur d'identi-fiants (14) est un lecteur RFID.

5. Dispositif (1) selon l'une des revendications 1 à 4, **caractérisé en ce que** le détecteur d'identification (14) est intégré dans le capteur de sécurité.

6. Dispositif (1) selon l'une des revendications 1 à 5, **caractérisé en ce que** le capteur de sécurité est un rideau lumineux 7, un capteur de distance de zone ou un capteur d'enregistrement d'images.

7. Dispositif (1) selon l'une des revendications 1 à 6, **caractérisé en ce que** le contrôle de sécurité (12) a une structure à deux canaux.

8. Dispositif (1) selon l'une des revendications 1 à 7, **caractérisé en ce que** le capteur de sécurité est ponté au moyen de la commande de sécurité (12) en fonction du contenu des données et du temps de détection des marques d'identification (13) au moyen du détecteur de marques d'identification (14).

9. Dispositif (1) selon l'une des revendications 1 à 8, **caractérisé en ce qu'**un identificateur (13) contient comme contenu de données des informations sur l'objet non critique pour la sécurité (6) identifié par cet identificateur (13).

10. Dispositif (1) selon l'une des revendications 1 à 9, **caractérisé en ce qu'**une identification (13) contient comme contenu de données des informations de contrôle pour le pontage du capteur de sécurité.

11. Dispositif (1) selon l'une des revendications 1 à 10, **caractérisé en ce qu'**une identification (13) contient différents contenus de données, qui sont sécurisés avec différentes sommes de contrôle.

12. Dispositif (1) selon l'une des revendications 1 à 11, **caractérisé en ce que** la fonction du contrôle de sécurité (12) peut être vérifiée par la détection de marques d'identification (13).
